# EUROPEAN PATENT APPLICATION

(11) **EP 4 510 325 A1**
(43) Date of publication of application: **19.02.2025**
(21) Application number: 24194596.3
(22) Date of filing: 14.08.2024
(51) Int. Cl.: H01M 50/152, H01M 50/167, H01M 50/184

(54) **SECONDARY BATTERY**

(30) Priority: 14.08.2023 KR 20230106092
(71) Applicant: SAMSUNG SDI CO., LTD., Giheung-gu Yongin-si, Gyeonggi-do 17084 (KR)
(72) Inventor: Ma, Han Sol, 17084 Yongin-si, Gyeonggi-do (KR); Lee, Ju Hyung, 17084 Yongin-si, Gyeonggi-do (KR); Kim, Yo Seob, 17084 Yongin-si, Gyeonggi-do (KR); Yoon, Byung Jin, 17084 Yongin-si, Gyeonggi-do (KR); Kim, Dae Kyu, 17084 Yongin-si, Gyeonggi-do (KR)
(74) Representative: Gulde & Partner

(57) **Abstract**

A secondary battery (10) includes a cylindrical can (100), an electrode assembly (200) in the cylindrical can (100) together with an electrolytic solution, and a cap assembly (400) coupled to the top of the cylindrical can (100), the cap assembly (400) including a cap-up (410) including a cap-up circumference flat portion (411) and a cap-up circumference bent portion (412) bent from the cap-up circumference flat portion (411) in a downward direction and a safety plate (420) coupled to the cap-up circumference flat portion (411) and the cap-up circumference bent portion (412).

## Description

### BACKGROUND

### 1. Field

Embodiments of the present disclosure relate to a secondary battery.

### 2. Description of the Related Art

A secondary battery may be a power storage system that converts electrical energy into chemical energy, stores the chemical energy, and provides relatively high energy density.

Compared to a primary battery, which should not be rechargeable, a secondary battery should be rechargeable and is widely used in information technology (IT) devices such as smartphones, cellular phones, laptop computers, and/or tablet personal computers (PCs).

Recently, there has been an increased interest in electric vehicles to prevent or reduce environmental pollution, and high-capacity secondary batteries are being adopted in electric vehicles. For such secondary batteries, characteristics such as high capacity and/or high energy density are desired and/or required.

In the past, a cap-upless type or kind ultra-thin cap assembly (*e.g*., an electrode assembly with a cap that does not substantially protrude in an upward direction) was developed to increase the cell capacity and energy density of the secondary battery.

However, as a part such as the cap assembly becomes thinner, the part may more easily be deformed by force applied thereto during cell forming, and the cap-upless type or kind cap assembly may be more easily deformed.

Therefore, it is desirable to develop a technology capable of securing the cell capacity and energy density of a cylindrical secondary battery while securing durability against force applied during cell forming by the provision of a cap-up.

The information disclosed in this section is provided only for enhancement of understanding of the background of the disclosure and therefore it may contain information that does not form the prior art.

### SUMMARY

The invention is defined by the appended claims. The description that follows is subjected to this limitation. Any disclosure lying outside the scope of said claims is only intended for illustrative as well as comparative purposes.

One or more embodiments of the present disclosure are directed toward a secondary cell configured such that a circumferential portion of a cap-up is half-curled in a downward direction toward a safety plate, whereby the overall thickness of a cap assembly is still less than the overall thickness of a comparable cap assembly of the related art, and therefore it is possible to secure a relatively large capacity.

Additional aspects will be set forth in part in the description which follows and, in part, will be apparent from the description, or may be learned by practice of the presented embodiments of the disclosure.

A secondary battery according to one or more embodiments includes a cylindrical can, an electrode assembly in (e.g., received in) the cylindrical can together with an electrolytic solution, and a cap assembly coupled to the top of the cylindrical can, the cap assembly including a cap-up including a cap-up circumference flat portion and a cap-up circumference bent portion bent from the cap-up circumference flat portion in a downward direction and a safety plate coupled to the cap-up circumference flat portion and the cap-up circumference bent portion.

The safety plate may be configured to vent internal gas while interrupting current. If an internal pressure of the cylindrical can exceeds an operating pressure of the safety plate, a portion establishing the electrical connection to the electrodes in conjunction with the caps assembly of the safety plate may be configured to rise upward due to gas vented through a gas vent hole of the cap assembly and acting on the portion, causing the safety plate and the cap assembly to be electrically separated from each other, thereby interrupting the current. Further the safety plate may be configured that if the internal pressure of the cylindrical can exceeds fracture pressure higher than the operation pressure of the safety plate, a connection between the remaining parts of the safety plate and the portion of the safety plate may be fractured to prevent or reduce the likelihood of an explosion of the secondary battery.

In one or more embodiments, the cap-up may further include a terminal flat portion at a central part of the cap-up projecting in an upward direction and a bridge portion bent from the cap-up circumference flat portion to the terminal flat portion in the upward direction, the bridge portion connecting (e.g., configured to connect) the cap-up circumference flat portion and the terminal flat portion to each other, the bridge portion having at least one opening.

In one or more embodiments, the safety plate may include a safety plate circumference flat portion, and an outer surface of the safety plate circumference flat portion may be in contact with an inner surface of the cap-up circumference bent portion.

The inner surface of the cap-up circumference bent portion may be a surface that is directed and faces towards the interior of the can. The outer surface of the safety plate circumference flat portion may be a surface that is directed and faces towards the exterior of the can.

In one or more embodiments, the safety plate may include a safety plate circumference flat portion, and an outer surface of the safety plate circumference flat portion may be in contact with the entirety of an inner surface of the cap-up circumference bent portion. The entirety of the inner surface of the cap-up circumference bent portion and an entirety of the outer surface of the safety plate circumference flat portion may be contacting each other.

In one or more embodiments, the safety plate may include a safety plate circumference flat portion, and a portion of an outer surface of the safety plate circumference flat portion may be in contact with a part of an inner surface of the cap-up circumference bent portion.

In one or more embodiments, another (*e.g*., an other) portion of the outer surface of the safety plate circumference flat portion may be spaced and/or apart (*e.g*., spaced apart or separated) from the remaining part of the inner surface of the cap-up circumference bent portion, the remaining part not including (*e.g*., excluding) the part of the inner surface of the cap-up circumference bent portion in contact with the portion of the outer surface of the safety plate circumference flat portion.

In one or more embodiments, a distance between the other portion of the outer surface of the safety plate circumference flat portion and the remaining part of the inner surface of the cap-up circumference bent portion may gradually increase in the downward direction.

In one or more embodiments, the inner surface of the cap-up circumference bent portion may be in contact with the outer surface of the safety plate circumference flat portion in a downwardly inclined state.

In one or more embodiments, wherein the cap-up circumference bent portion is bent from the cap-up circumference flat portion toward an outer surface of the safety plate at an angle of 40° degrees to 90° degrees, preferably 50° degrees to 90° degrees and more preferably 60° degrees to 90° degrees. In other words, an angle between the inner surface of the cap-up circumference flat portion and the outer surface of the safety plate may be 180° degrees minus 40° degrees to 90° degrees, preferably 50° degrees to 90° degrees and more preferably 60° degrees to 90° degrees.

In one or more embodiments, the cap-up circumference bent portion may be bent from the cap-up circumference flat portion toward an outer surface of the safety plate at an angle of 60 degrees (°) to 90 degrees (°).

In one or more embodiments, the safety plate may further include an upper bent portion bent from an inner part of the safety plate circumference flat portion in the upward direction, a lower bent portion connected to the upper bent portion, the lower bent portion being bent in the downward direction, an inner flat portion connected to the lower bent portion, the inner flat portion being lower than the safety plate circumference flat portion, and a breaking element configured to form a breaking point and to guide breakage, wherein the breaking element configured to form a breaking point and to guide breakage may be a notch, in a lower surface of the upper bent portion.

In one or more embodiments, a weld region may be between the cap-up circumference flat portion and the safety plate circumference flat portion.

In one or more embodiments, the weld region may be through a lower surface of the safety plate circumference flat portion.

In one or more embodiments, the weld region may be (*e.g*., be formed in or as) a line (e.g., may have a shape of a line).

In one or more embodiments, a distance d between the safety plate and the cap-up may be at least 1.0 mm and preferably at least 1.6 mm to allow for breakage of the notch. The distance may be between the inner flat portion and the terminal flat portion.

In one or more embodiments, the cap assembly may further include an insulation gasket interposed between the cap assembly and the cylindrical can, the insulation gasket wrapping around (e.g., being configured to wrap around or overlap) the cap-up circumference flat portion, the cap-up circumference bent portion, and/or the safety plate circumference flat portion.

In one or more embodiments, the cap assembly may further include a connection ring coupled to the bottom of the safety plate and a cap-down coupled to the bottom of the connection ring, the cap-down electrically connecting a positive electrode of the electrode assembly and the safety plate to each other.

In one or more embodiments, the cylindrical can may include a bottom portion, a side portion extending from the bottom portion in the upward direction, a beading portion at an upper part of the side portion and recessed inwardly at the cap assembly, and a crimping portion at an upper part of the beading portion and bent toward the interior of the cylindrical can.

In one or more embodiments, the thickness of the crimping portion may be 2.0% to 3.9%, preferably 2.55% to 3.75% and more preferably 3.1% to 3.5% of the total height from the bottom portion of the cylindrical can to the cap assembly. The height may refer to the two regions of the bottom portion of the cylindrical can and the cap assembly that are furthest apart, in other words to the region of the bottom portion of the cylindrical can that is lowest in the downward direction and the region of the cap assembly that is highest in the upward direction. The thickness may be an extension between an outer surface of the crimping portion and a part of an outer surface of the beading portion that is closest to the outer surface of the crimping portion.

In one or more embodiments, the thickness of the crimping portion may be 3.1% to 3.5% of the total height from the bottom portion of the cylindrical can to the cap assembly.

In one or more embodiments, the length from a lower end of the beading portion to the bottom portion may be 90% to 99%, preferably 93% to 98% and more preferably 96% to 97% of the total height from the bottom portion of the cylindrical can to the cap assembly. The height may refer to the two regions of the bottom portion of the cylindrical can and the cap assembly that are furthest apart, in other words to the region of the bottom portion of the cylindrical can that is lowest in the downward direction and the region of the cap assembly that is highest in the upward direction.

In one or more embodiments, the length from a lower end of the beading portion to the bottom portion may be 96% to 97% of the total height from the bottom portion of the cylindrical can to the cap assembly.

### BRIEF DESCRIPTION OF THE DRAWINGS

The accompanying drawings, which are incorporated in this specification, illustrate some embodiments of the present disclosure and serve to further illustrate the technical ideas of the present disclosure in conjunction with the detailed description of example embodiments that follows. Therefore, the present disclosure shall not be interpreted as being defined only by the aspects illustrated in the drawings. In the drawings:
FIG. 1 is a perspective view of a secondary battery according to one or more embodiments of the present disclosure;
FIG. 2, is a cross-sectional view of a secondary battery according to one or more embodiments of the present disclosure;
FIG. 3 is an exploded perspective view of a secondary battery according to one or more embodiments of the present disclosure;
FIG. 4 is a cross-sectional view showing the relationship between a cylindrical can and a cap assembly of the secondary battery according to one or more embodiments of the present disclosure;
FIGs. 5 and 6 are each a cross-sectional view showing the contact structure between a cap-up circumference bent portion and a safety plate circumference flat portion;
FIG. 7 is a cross-sectional view showing a comparable secondary battery of the related art (a) and a secondary battery according to one or more embodiments of the present disclosure (b) for a thickness comparison therebetween; and
FIG. 8 is a schematic view of the comparable secondary battery of the related art (a) and the secondary battery according to one or more embodiments of the present disclosure (b) for a thickness comparison therebetween.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

In the following drawings, the thickness or size of each layer may be exaggerated for convenience and/or clarity of description. In the drawings, the relative sizes of elements, layers, and regions may be exaggerated for clarity. Unless otherwise noted, like reference numerals denote like elements throughout the attached drawings and the written description, and thus, duplicative descriptions thereof may not be provided.

As used herein, the term "and/or" includes any and all combinations of one or more of the associated listed items. It will be understood that when an element, such as an area, layer, film, region or portion, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the terms "use," "using," and "used" may be considered synonymous with the terms "utilize," "utilizing," and "utilized," respectively.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Spatially relative terms, such as "on," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated.

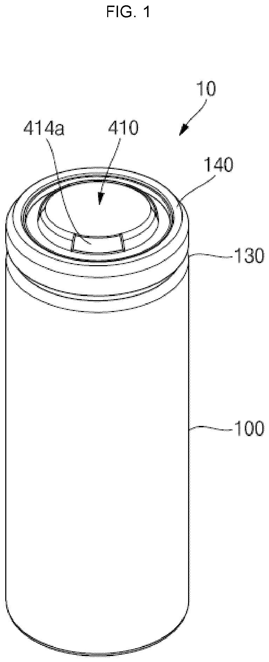

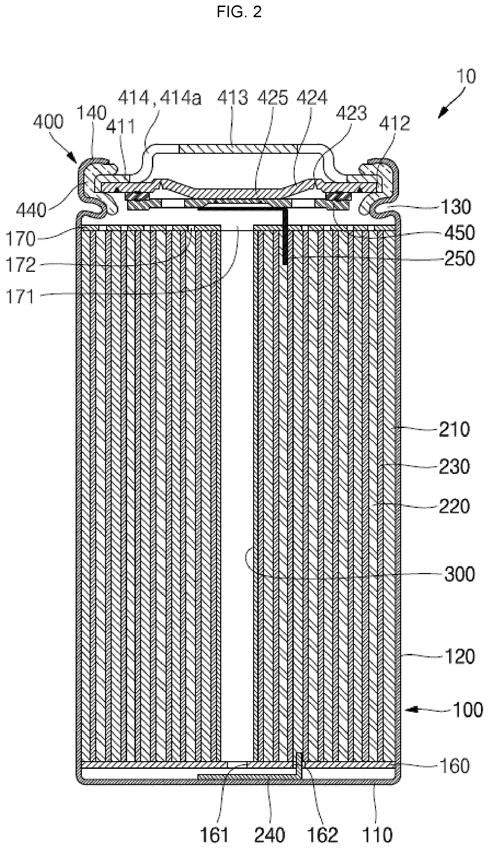

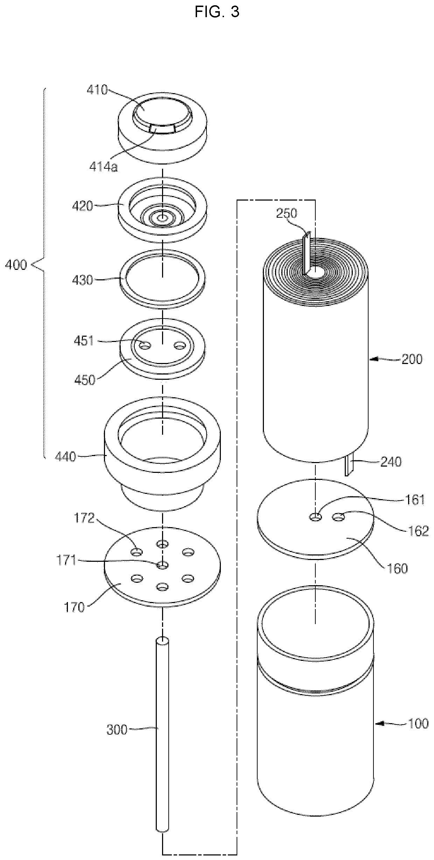

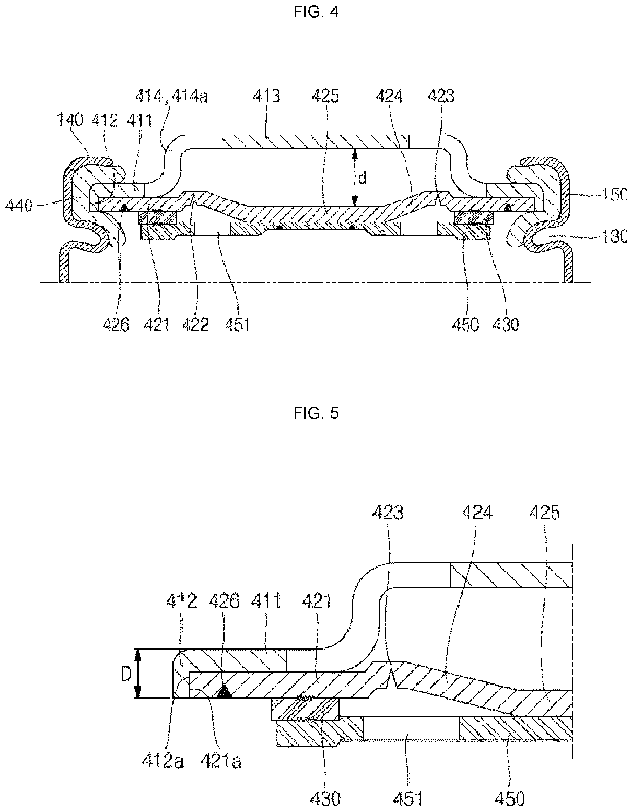

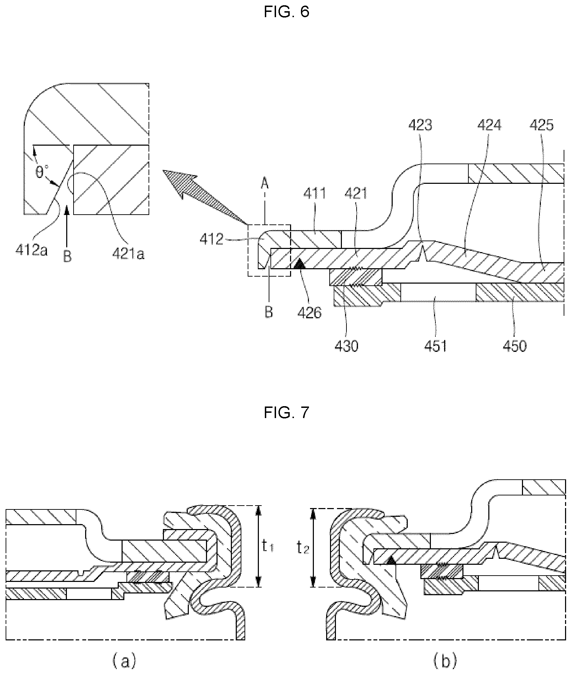

FIGs. 1, 2, and 3 are, respectively, a perspective view, a cross-sectional view, and an exploded perspective view each showing a secondary battery according to one or more embodiments of the present disclosure, FIG. 4 is a cross-sectional view showing the relationship between a cylindrical can and a cap assembly of the secondary battery according to one or more embodiments of the present disclosure, and FIGs. 5 and 6 are cross-sectional views showing the contact structure between a cap-up circumference bent portion and a safety plate circumference flat portion.

Referring to FIGs. 1, 2, and 3, the secondary battery 10 according to one or more embodiments may include a cylindrical can 100, an electrode assembly 200, and a cap assembly 400. The secondary battery 10 according to one or more embodiments may further include a center pin 300.

The cylindrical can 100 may include a circular bottom portion 110 and a side portion 120 extending from the bottom portion 110 by a set or predetermined length in an upward direction. During a process of manufacturing the secondary battery 10, the top of the cylindrical can 100 may be open. During the process of manufacturing the secondary battery 10, therefore, the electrode assembly 200 may be inserted into the cylindrical can 100 along with an electrolytic solution. The cylindrical can 100 may be formed of iron, an iron alloy, aluminum, an aluminum alloy, or an equivalent thereto, but the material is not limited thereto.

In order to prevent or substantially prevent the cap assembly 400 from being separated outwardly from the cylindrical can 100, the cylindrical can 100 may have an inwardly recessed beading portion 130 formed at the part thereof located under the cap assembly 400 and an inwardly bent crimping portion 140 formed at the part thereof located above the cap assembly 400.

The cylindrical can 100 may filled with an electrolytic solution, which allows lithium ions generated by electrochemical reaction on a negative electrode plate 210 and a positive electrode plate 220 in the battery during charging and discharging to move therethrough. The electrolytic solution may be a non-aqueous organic electrolytic solution, which is a mixture of a lithium salt and a high-purity organic solvent. The electrolytic solution may be, but is not limited to, a polymer using a polymer electrolyte or a solid electrolyte.

A first insulating plate 160 coupled to the cylindrical can 100 and having a first hole 161 formed in the center and a second hole 162 formed at an outside thereof may be interposed between the electrode assembly 200 and the bottom portion 110. The first insulating plate 160 may serve to prevent or substantially prevent the electrode assembly 200 from electrically contacting the bottom portion 110 of the cylindrical can 100. The first insulating plate 160 may serve to prevent or substantially prevent the positive electrode plate 220 of the electrode assembly 200 from electrically contacting the bottom portion 110. The first hole 161 of the first insulating plate 160 may serve to allow gas to quickly move upward through the center pin 300 if a large amount of gas is generated due to abnormality of the secondary battery 10, and the second hole 162 of the first insulating plate 160 may serve to allow a negative electrode tab 240 to extend therethrough and to be welded to the bottom portion 110.

A second insulating plate 170 coupled to the cylindrical can 100 and having a first hole 171 formed in the center and a plurality of second holes 172 formed at an outside thereof may be interposed between the electrode assembly 200 and the cap assembly 400. The second insulating plate 170 may serve to prevent or substantially prevent the electrode assembly 200 from electrically contacting the cap assembly 400. The second insulating plate 170 may serve to prevent or substantially prevent the negative electrode plate 220 of the electrode assembly 200 from electrically contacting the cap assembly 400. The first hole 171 of the second insulating plate 170 may serve to allow gas to quickly move to the cap assembly 400 if a large amount of gas is generated due to abnormality of the secondary battery 10, and one of the second holes 172 of the second insulating plate 170 may serve to allow a positive electrode tab 250 to extend therethrough and to be welded to the cap assembly 400. The other second holes 172 of the second insulating plate 170 may serve to allow an electrolytic solution to flow quickly into the electrode assembly 200 during a process of injecting the electrolytic solution.

The diameters of the first holes 161 and 171 of the first and second insulating plates 160 and 170 may be less than the diameter of the center pin 300 to prevent or substantially prevent the center pin 300 from electrically contacting the bottom portion 110 of the cylindrical can 100 or the cap assembly 400 by external impact.

The electrode assembly 200 may be received in the cylindrical can 100. The electrode assembly 200 may include a negative electrode plate 210 coated with a negative electrode active material (*e.g*., graphite or carbon), a positive electrode plate 220 coated with a positive electrode active material (*e.g*., a transition metal oxide (LiCoOz, LiNiO₂, or LiMn₂O₄)), and a separator 230 located between the negative electrode plate 210 and the positive electrode plate 220 to prevent or reduce the likelihood of a short circuit therebetween and to allow only movement of lithium ions. The negative electrode plate 210, the positive electrode plate 220, and the separator 230 may be wound in a roughly columnar shape. The negative electrode plate 210 may be made of copper (Cu) foil or nickel (Ni) foil, the positive electrode plate 220 may be made of aluminum (Al) foil, and the separator 230 may be made of polyethylene (PE) or polypropylene (PP); however, the present disclosure is not limited thereto. The negative electrode plate 210 may include at least one negative electrode tab 240 protruding and extending downward by a set or predetermined length, and the positive electrode plate 220 may include at least one positive electrode tab 250 protruding upward by a set or predetermined length. The negative electrode tab 240 and the positive electrode tab 250 may be made of separate metal plates and may be welded to the negative electrode plate 210 and the positive electrode plate 220, respectively. In one or more embodiments, the negative electrode tab 240 may protrude and extend upward from the electrode assembly 200, and the positive electrode tab 250 may protrude and extend downward from the electrode assembly 200. The negative electrode tab 240 may be made of copper or nickel, and the positive electrode tab 250 may be made of aluminum; however, the present disclosure is not limited thereto.

The negative electrode tab 240 of the electrode assembly 200 may be welded to the bottom portion 110 of the cylindrical can 100. Thus, the cylindrical can 100 may serve as a negative electrode. In one or more embodiments, the electrode tab 250 may be welded to the bottom portion 110 of the cylindrical can 100, in which case the cylindrical can 100 may serve as a positive electrode.

The center pin 300 may be in the form of a hollow circular pipe, which may be coupled to approximately the center of the electrode assembly 200. The center pin 300 may be formed of steel, a steel alloy, aluminum, an aluminum alloy, or polybutylene terephthalate; however, the present disclosure is not limited thereto. The center pin 300 may serve to inhibit or reduce deformation of the electrode assembly 200 during charging and discharging of the secondary battery 10, and may serve as a conduit for gas generated in the secondary battery 10. In one or more embodiments, the center pin 300 may not be provided.

The cap assembly 400 may be coupled to a top of the cylindrical can 100. The cap assembly 400 may include a cap-up 410 located at the uppermost part of the secondary battery 10 and a safety plate 420 installed under the cap-up 410. The cap assembly 400 may further include a connection ring 430 installed under the safety plate 420, an insulation gasket 440 configured to couple circumferential portions of the cap-up 410 and the safety plate 420 to each other, and a cap-down 450 coupled to a lower surface of the connection ring 430. The positive electrode tab 250 may be fixed to a lower surface of the cap-down 450.

The cap-up 410 may be formed with a convex center top so as to be electrically connected to an external circuit. The cap-up 410 may also have an opening (hereinafter referred to as a gas vent hole) 414a that provides a path for gas generated in the cylindrical can 100 to be vented. The cap-up 410 may be electrically connected to the electrode assembly 200, and may be to transmit current generated by the electrode assembly 200 to the external circuit.

Referring to FIG. 4, the cap-up 410 may include a cap-up circumference flat portion 411, a cap-up circumference bent portion 412, a terminal flat portion 413, and a bridge portion 414.

The cap-up circumference flat portion 411 corresponds to the circumferential portion of the cap-up 410 and may have a flat structure.

The cap-up circumference bent portion 412 may be bent downward from the cap-up circumference flat portion 411 (e.g., at the periphery of the cap-up 410) to wrap an outer surface of the safety plate 420 coupled to the bottom thereof. As shown in FIG. 5, therefore, an inner surface 412a of the cap-up circumference bent portion 412 may contact (e.g., be force fitted to) the outer surface 421a of the safety plate 420. The outer surface 421a of the safety plate 420 may refer to an outer surface 421a of a safety plate circumference flat portion 421, a description of which will follow. The inner surface 412a of the cap-up circumference bent portion 412 may be a surface that is directed and faces towards the interior of the can 100. The outer surface 421a of the safety plate 420 may be a surface that is directed and faces towards the exterior of the can 100.

The cap-up circumference bent portion 412 may be bent from the cap-up circumference flat portion 411 toward the outer surface 421a of the safety plate circumference flat portion 421 at an angle of about 60 degrees (°) to 90 degrees (°).

If the cap-up circumference bent portion 412 is bent at an angle of 90 degrees (°), as shown in FIG. 5, the entirety of the inner surface 412a of the cap-up circumference bent portion 412 and the entirety of the outer surface 421a of the safety plate circumference flat portion 421 may be brought into contact (*e.g*., tight contact) with each other.

If the cap-up circumference bent portion 412 is bent at an angle of less than 90 degrees (°) (60°≤θ≤90°), as shown in part A of FIG. 6, a part of the inner surface 412a of the cap-up circumference bent portion 412 and a part of the outer surface 421a of the safety plate circumference flat portion 421 may be brought into contact with each other. The inner surface 412a of the cap-up circumference bent portion 412 may be inclined downwardly and may be brought into contact with the outer surface 421a of the safety plate circumference flat portion 421.

The outer surface 421a of the safety plate circumference flat portion 421 may be spaced and/or apart (*e.g*., spaced apart or separated) at gap B from the remaining part of the inner surface 412a of the cap-up circumference bent portion 412 excluding the abovementioned part thereof. The contact structure between the outer surface 421a of the safety plate circumference flat portion 421 and the inner surface 412a of the cap-up circumference bent portion 412 may be configured such that the distance between the outer surface 421a of the safety plate circumference flat portion 421 and the inner surface 412a of the cap-up circumference bent portion 412 gradually increases in a downward direction. Consequently, the inner surface 412a of the cap-up circumference bent portion 412 and the outer surface 421a of the safety plate circumference flat portion 421 may be in contact at the top, but are separated in the middle, and the distance therebetween gradually increases toward the bottom, resulting in a section that is approximately right triangular in shape.

The terminal flat portion 413 may be formed in the shape of a dome with a central part of the cap-up 410 projecting upward. The terminal flat portion 413 may serve as a positive electrode terminal.

The bridge portion 414 may be bent from the cap-up circumference flat portion 411 to the terminal flat portion 413 in the upward direction to connect the cap-up circumference flat portion 411 and the terminal flat portion 413 to each other. At least one gas vent hole 414a may be formed in the bridge portion 414 to allow internal gas to be vented to the outside if abnormal pressure is generated in the cylindrical can 100.

The safety plate 420 may be formed as a circular plate corresponding to the cap-up 410, and may be coupled to the cap-up circumference flat portion 411 and the cap-up circumference bent portion 412. The safety plate 420 may include a safety plate circumference flat portion 421, a notch 422, an upper bent portion 423, a lower bent portion 424, an inner flat portion 425, and a weld region 426. In one or more embodiments, the distance d between the safety plate 420 and the cap-up 410 may be at least 1.6 mm to allow for breakage of the notch 422.

The safety plate circumference flat portion 421 may be the circumferential portion of the safety plate 420 and may be flat.

The upper bent portion 423 may be formed at an inner part of the safety plate circumference flat portion 421 in a state of being bent in the upward direction. For example, the upper bent portion 423 may protrude in the upward direction.

The lower bent portion 424 may be connected to the upper bent portion 423, and may be bent in the downward direction. For example, the lower bent portion 424 may be inclined from the upper bent portion 423 in the downward direction, *i.e*., toward the inner flat portion 425.

The inner flat portion 425 may be connected to the lower bent portion 424, may be formed so as to be lower than the safety plate circumference flat portion 421, and may be in contact with an upper surface of the cap-down 450.

A notch 422 may be provided in the bottom of the upper bent portion 423, the notch 422 configured to guide breakage of the safety plate 420. If a short circuit occurs in the secondary battery 10, internal pressure may rise, causing internal gas to be vented through a gas vent hole 451 of the cap-down 450. The vented gas may cause the inner flat portion 425 of the safety plate 420 to rise, causing the safety plate 420 and the cap-down 450 to be electrically separated from each other, thereby interrupting the current.

If abnormal pressure is generated in the cylindrical can 100, the safety plate 420 may vent internal gas while interrupting current. If the internal pressure of the cylindrical can 100 exceeds the operating pressure of the safety plate 420, the inner flat portion 425 may rise upward due to gas vented through the gas vent hole 451 of the cap-down 450, whereby the inner flat portion 425 may be electrically separated from the safety plate 420. If the internal pressure of the cylindrical can 100 exceeds fracture pressure higher than the operation pressure of the safety plate 420, the notch 422 of the safety plate 420 may be fractured to prevent or reduce the likelihood of an explosion of the secondary battery 10.

The weld region 426 may be through a lower surface of the safety plate circumference flat portion 421. The weld region 426 may be formed between the cap-up circumference flat portion 411 and the safety plate circumference flat portion 421. The weld region 426 may be a region provided for performing welding through a lower surface of the safety plate circumference flat portion 421, and may be (*e.g*., be formed in or as) a line (e.g., may have a shape of a line). A lower surface of the cap-up circumference flat portion 411 and an upper surface of the safety plate circumference flat portion 421 may be coupled to each other by welding. The cap-up circumference flat portion 411 and the safety plate circumference flat portion 421 may be welded to each other by laser welding, ultrasonic welding, resistance welding, or an equivalent thereto.

The connection ring 430 may be interposed between the safety plate 420 and the cap-down 450. The connection ring 430 may be interposed between a lower surface of the safety plate circumference flat portion 421 and an upper surface of the circumferential portion of the cap-down 450. The connection ring 430 may be made of a resin such as polyethylene (PE), polypropylene (PP), or polyethylene terephthalate (PET).

The insulation gasket 440 may be interposed between the rest of the cap assembly 400 and the cylindrical can 100 while wrapping the cap-up circumference flat portion 411, the cap-up circumference bent portion 412, and the safety plate circumference flat portion 421 to insulate the cap assembly 400 from the side portion 120 of the cylindrical can 100. The insulation gasket 440 may be substantially pressed between the beading portion 130 and the crimping portion 140 formed at the side portion 120 of the cylindrical can 100. The insulation gasket 440 may be assembled in a tight fit between circumferential portions of the cap-up 410 and the safety plate 420 and an upper end opening of the cylindrical can 100. The cap-up 410 coupled to the safety plate 420 may be fixed to an upper end of the cylindrical can 100 with the insulation gasket 440 interposed therebetween by the crimping portion 140 formed at the upper end of the cylindrical can 100. The crimping portion 140 may be at an upper part of the beading portion 130 and bent toward an interior of the cylindrical can 100.

The insulation gasket 440 may be made of a resin such as polyethylene (PE), polypropylene (PP), or polyethylene terephthalate (PET). The insulation gasket 440 may prevent or reduce the likelihood of the cap assembly 400 from being separated from the cylindrical can 100.

The cap down 450 may be formed as a circular plate. A gas vent hole 451 may be formed in one side of the cap-down 450, and the gas vent hole 451 may serve to vent internal gas if excessive pressure is generated in the cylindrical can 100. The inner flat portion 425 of the safety plate 420 may be raised by the gas vented through the gas vent hole 451, whereby the inner flat part 425 of the safety plate 420 and cap-down 450 may be separated from each other. If the internal pressure of the cylindrical can 100 is normal, the inner flat portion 425 of the safety plate 420 may be electrically connected to the positive electrode tab 250 via the cap-down 450. The cap-down 450 may electrically connect a positive electrode plate 220 of the electrode assembly 200 and the safety plate 420 to each other.

As shown, for example, in FIG. 7, a comparable cylindrical secondary battery of the related art (a) is provided with a bent portion curled such that the circumferential portion of the safety plate located under the cap-up wraps the circumferential portion of the cap-up. Consequently, a wing portion of the cap assembly may be a three-layered wing portion having an upper region (first layer), in which the circumferential portion of the safety plate is curled upward and raised above the circumferential portion of the cap-up, a middle region (second layer), which is the circumferential portion of the cap-up wrapped by the circumferential portion of the safety plate, and a lower region (third layer) of the safety plate connected to the bent portion of the safety plate, and the wing portion may have a thickness of about 1.2 mm.

In order to increase the capacity of the cylindrical secondary battery, it is necessary to increase the length of part of the cylindrical secondary battery below the beading portion. To this end, in a secondary battery of one or more embodiments of the present disclosure (b), as shown, for example, in FIG. 7, the wing portion of the cap-up 410 may be half-curled in the downward direction only until the wing portion of the cap-up 410 comes into contact with the outer surface of the safety plate 420, rather than curling the wing portion of the safety plate 420 as is done in the related art. In this case, the wing portion of the cap assembly 400 may be a two-layered wing portion having the circumferential portion of the cap-up 410 (first layer) and the circumferential portion of the safety plate 420 (second layer). The wing portion may have a thickness D of about 0.8 mm.

Slimming of components is essential for high capacity and high energy density of a cylindrical cell. If the cap-up is removed, however, the components may be bent by force applied thereto during cell formation. Consequently, a structure that enables high capacity and high energy density of a cylindrical cell to be achieved in the presence of the cap-up may be desired or suitable.

In one or more embodiments, therefore, the cap assembly may be formed so as to be ultra-thin in the presence of the cap-up to secure the capacity and the energy density of the cylindrical cell. Hereinafter, a comparable secondary battery of the related art (a) with a cap-up and a secondary battery (b) according to one or more embodiments will be described through comparison therebetween.

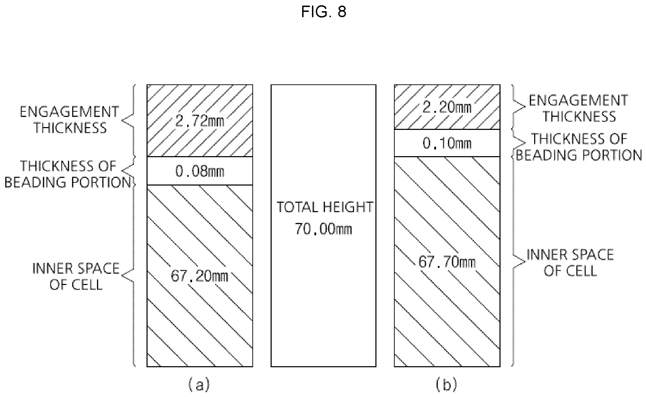

FIGs. 7 and 8 are views showing a comparable secondary battery of the related art (shown on the left side of FIGs. 7 and 8 as (a)) and a secondary battery according to one or more embodiments (shown on the right side of FIGs. 7 and 8 as (b)) for a thickness comparison therebetween. FIG. 7 is a cross-sectional view showing a cap assembly of the comparable secondary battery of the related art (a) and a cap assembly of the secondary battery (b) according to one or more embodiments of the present disclosure, respectively.

Referring to FIGs. 7 and 8, both the comparable secondary battery of the related art (a) and the secondary battery according to one or more embodiments (b) have the same total height of about 70.00 mm. The total height may be defined as the length from the bottom portion of the cylindrical can to the cap assembly. In the comparable secondary battery (a), it can be seen that the engagement thickness t1 between the cap-up and the safety plate is about 2.72 mm, the thickness of the beading portion is about 0.08 mm, and the height of the inner space of the cell is about 67.20 mm. In the secondary battery according to one or more embodiments (b), it can be seen that the engagement thickness t2 between the cap-up and the safety plate is about 2.20 mm, the thickness of the beading portion is about 0.10 mm, and the height of the inner space of the cell is about 67.70 mm. Consequently, the secondary battery according to one or more embodiments (b) may further secure a higher height of an inner space of the cell by about 0.52 mm compared to the comparable secondary battery of the related art (a).

In the comparable secondary battery of the related art (a), the thickness t1 of the crimping portion in a longitudinal direction of the cylindrical can may account for about 3.9% of the total height, and the length from the lower end of the beading portion to the bottom portion of the cylindrical can (the height of J/R space in the cell) may account for about 96% of the total height. In the secondary battery according to one or more embodiments (b), the thickness t2 of the crimping portion in the longitudinal direction of the cylindrical can may account for about 3.1% of the total height, and the length from the lower end of the beading portion to the bottom portion of the cylindrical can may account for about 97% of the total height. In the secondary battery according to one or more embodiments (b), therefore, it can be seen that the thickness of the crimping portion is reduced by about 20% and the length from the lower end of the beading portion to the bottom portion of the cylindrical can is increased by about 0.7% compared to the comparable secondary battery of the related art. These numbers, however, are based on the one or more embodiments of FIGs. 7 and 8, and the percentages may vary depending on the size of the secondary battery.

For example, in the secondary battery according to one or more embodiments (b), the thickness of the crimping portion may be about 3.1% to about 3.5% of the total height, and the length from the lower end of the beading portion to the bottom portion of the cylindrical can may be about 96% to about 97% of the total height.

Consequently, it can be seen that, in the secondary battery according to one or more embodiments, the length from the lower end of the beading portion to the bottom portion of the cylindrical can, *i.e.*, the inner space of the cell, is increased as the thickness of the crimping portion decreases compared to another battery having the same total height.

As described above, in the secondary battery according to one or more embodiments, the thickness of the beading portion is slightly (e.g., not substantially) increased as the engagement thickness of the cap assembly is reduced, but the height of the inner space of the cell is increased to secure the inner space of the cell. Consequently, a decrease in thickness of the wing portion of the cap assembly may enable an increase in the inner space of the cell, which in turn may enable an increase in the overall size of the electrode assembly, thereby enabling an increase in capacity and an increase in energy density compared to another secondary battery of the same size.

As is apparent from the above description, in a secondary cell according to one or more embodiments of the present disclosure, a circumferential portion of a cap-up may be half-curled in a downward direction toward a safety plate, whereby the overall thickness of a cap assembly may be less than the overall thickness of a comparable cap assembly of the related art, and therefore it is possible to secure a relatively large capacity.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

## Claims

1. A secondary battery (10) comprising:
a cylindrical can (100);
an electrode assembly (200) in the cylindrical can (100) together with an electrolytic solution; and
a cap assembly (400) coupled to a top of the cylindrical can (100), the cap assembly (400) comprising:
a cap-up (410) comprising a cap-up circumference flat portion (411) and a cap-up circumference bent portion (412) bent from the cap-up circumference flat portion (411) in a downward direction; and
a safety plate (420) coupled to the cap-up circumference flat portion (411) and the cap-up circumference bent portion (412).

2. The secondary battery (10) as claimed in claim 1, wherein the cap-up (410) further comprises:
a terminal flat portion (413) at a central part of the cap-up (410) projecting in an upward direction; and
a bridge portion (414) bent from the cap-up circumference flat portion (411) to the terminal flat portion (413) in the upward direction, the bridge portion (414) connecting the cap-up circumference flat portion (411) and the terminal flat portion (413) to each other, the bridge portion (414) having at least one opening (414a).

3. The secondary battery (10) as claimed in claim 1 or 2, wherein
the safety plate (420) comprises a safety plate circumference flat portion (421), and
an outer surface (421a) of the safety plate circumference flat portion (421) is in contact with an inner surface (412a) of the cap-up circumference bent portion (412), or
an outer surface (421a) of the safety plate circumference flat portion (421) is in contact with an entirety of an inner surface (412a) of the cap-up circumference bent portion (412), or
a portion of an outer surface (421a) of the safety plate circumference flat portion (421) is in contact with a part of an inner surface (412a) of the cap-up circumference bent portion (412).

4. The secondary battery (10) as claimed in claim 3, wherein another portion of the outer surface (421a) of the safety plate circumference flat portion (421) is spaced from a remaining part of the inner surface (412a) of the cap-up circumference bent portion (412), the remaining part not comprising the part of the inner surface (412a) of the cap-up circumference bent portion (412) in contact with the portion of the outer surface (421a) of the safety plate circumference flat portion (421).

5. The secondary battery (10) as claimed in claim 4, wherein a distance between the other portion of the outer surface (421a) of the safety plate circumference flat portion (421) and the remaining part of the inner surface (412a) of the cap-up circumference bent portion (412) gradually increases in the downward direction.

6. The secondary battery (10) as claimed in any one of claims 3 to 5, wherein the inner surface (412a) of the cap-up circumference bent portion (412) is in contact with the portion of the outer surface (421a) of the safety plate circumference flat portion (421) in a downwardly inclined state.

7. The secondary battery (10) as claimed in any one of claims 1 to 6, wherein the cap-up circumference bent portion (412) is bent from the cap-up circumference flat portion (411) toward an outer surface (421a) of the safety plate (420) at an angle of 40° degrees to 90° degrees, preferably 50° degrees to 90° degrees and more preferably 60° degrees to 90° degrees.

8. The secondary battery (10) as claimed in any one of claims 3 to 7, wherein the safety plate (420) further comprises:
an upper bent portion (423) bent from an inner part of the safety plate circumference flat portion (421) in an upward direction;
a lower bent portion (424) connected to the upper bent portion (423), the lower bent portion (424) being bent in the downward direction;
an inner flat portion (425) connected to the lower bent portion (424), the inner flat portion (424) being lower than the safety plate circumference flat portion (421); and
a breaking element configured to form a breaking point and to guide breakage, particularly a notch (422), in a lower surface of the upper bent portion (423).

9. The secondary battery (10) as claimed in any one of claims 3 to 8, wherein a weld region (426) is between the cap-up circumference flat portion (411) and the safety plate circumference flat portion (421).

10. The secondary battery (10) as claimed in claim 9, wherein the weld region (426) is through a lower surface of the safety plate circumference flat portion (421), and/or wherein the weld region (426) has a shape of a line.

11. The secondary battery (10) as claimed in any one of claims 1 to 10, wherein the cap assembly (400) further comprises an insulation gasket (440) interposed between the cap assembly (400) and the cylindrical can (100), the insulation gasket (440) being wrapping around the cap-up circumference flat portion (411), the cap-up circumference bent portion (412), and/or the safety plate circumference flat portion (421).

12. The secondary battery (10) as claimed in any one of claims 1 to 11, wherein the cap assembly (400) further comprises:
a connection ring (430) coupled to a bottom of the safety plate (420); and
a cap-down (450) coupled to a bottom of the connection ring (430), the cap-down (450) electrically connecting a positive electrode of the electrode assembly (200) and the safety plate (420) to each other.

13. The secondary battery (10) as claimed in any one of claims 1 to 12, wherein the cylindrical can (100) comprises:
a bottom portion (110);
a side portion (120) extending from the bottom portion (110) in an upward direction;
a beading portion (130) at an upper part of the side portion (120) and recessed inwardly at the cap assembly (400); and
a crimping portion (140) at an upper part of the beading portion (130) and bent toward an interior of the cylindrical can (100).

14. The secondary battery (10) as claimed in claim 13, wherein a thickness of the crimping portion (140) is 2.0% to 3.9%, preferably 2.55% to 3.75% and more preferably 3.1% to 3.5% of a total height from the bottom portion (110) of the cylindrical can (100) to the cap assembly (400).

15. The secondary battery (10) as claimed in claim 13 or 14, wherein a length from a lower end of the beading portion (130) to the bottom portion (110) is about 90% to 99%, preferably 93% to 98% and more preferably 96% to about 97% of a total height from the bottom portion (110) of the cylindrical can (100) to the cap assembly (400).
